Europäisches Patentamt

(19) European Patent Office

Office européen des brevets

(11) Publication number: **0 146 331**
**B1**

(12) **EUROPEAN PATENT SPECIFICATION**

(45) Date of publication of patent specification: **06.05.87**

(21) Application number: **84308596.0**

(22) Date of filing: **11.12.84**

(51) Int. Cl.⁴: **E 03 F 3/06,** F 16 L 55/18, E 21 B 7/28

(54) A device and method for removing irregularities in or enlarging an underground duct.

(30) Priority: **16.12.83 GB 8333567**

(43) Date of publication of application:
**26.06.85 Bulletin 85/26**

(45) Publication of the grant of the patent:
**06.05.87 Bulletin 87/19**

(84) Designated Contracting States:
**AT BE CH DE FR IT LI LU NL SE**

(56) References cited:
**EP-A-0 084 427**
**US-A-1 807 488**
**US-A-3 924 371**
**US-A-4 259 030**
**US-A-4 309 128**

(73) Proprietor: **I.P.D. SYSTEMS LIMITED**
**St. John's House union Street**
**St. Peter Port Guernsey Channel Islands (GB)**

(72) Inventor: **Yarnell, Ian Roland**
**11, The Cylinders**
**Fernhurst Haslemere Surrey GU27 2HA (GB)**

(74) Representative: **Blatchford, William Michael et al**
**Withers & Rogers 4 Dyer's Buildings Holborn London EC1N 2JT (GB)**

Courier Press, Leamington Spa, England.

## Description

This invention relates to a device for profiling an underground duct, for example an underground sewer which is to be required by fitting an inner pipe lining.

In many of the developed industrial countries of the world, underground sewers have to a large extent reached an age at which they are in a state of severe disrepair and liable to collapse. One method of repairing sewers is to line the existing sewer pipe internally with plastics pipe sections or an expandable plastics sleeve. However, the condition of the original sewer is often such that the original earthenware pipe sections are displaced relative to each other or have already partly collapsed. In these circumstances the diameter of an inner pipe lining made up of rigid plastics pipe sections is limited over the length of sewer being repaired to that determined by the worst irregularity in that length. The result is that the flow capacity of the repaired sewer may be considerably reduced. Attempts have been made to hammer out the irregularities with a remotely controlled machine as in US—A—4,309,128, but this has proved difficult to control and can worsen the state of collapse.

It is an object of this invention to provide apparatus able largely to enlarge or correct the irregularities in an existing sewer in a relatively controllable and reliable manner.

According to a first aspect of the invention, apparatus for travelling through an underground duct and for enlarging or removing irregularities in the duct comprises an exandable segmented shell including a series of shell parts arranged around a longitudinal axis of the apparatus and having respective outwardly facing surface portions for engaging the sides of the duct, wherein the shell parts are movable laterally with respect to the axis from a contracted configuration to an expanded configuration for forcing the sides of the duct away from the axis to enlarge a portion of the duct, and a nose portion extending in a longitudinal direction forwardly of the segmented shell portion and having an outer surface engaging the sides of the duct ahead of the said segmented shell portion. The nose portion may comprise a second expandable and segmented shell including a second series of shell parts arranged around a longitudinal axis and having respective second outwardly facing surface portions for engaging the sides of the duct, the shell part of the second series being movable transversely with respect to the said axis between a contracted configuration and an expanded configuration. The shell parts of both series preferably each have a front end and a rear end, the front ends of the shell parts of the second series are each coupled on a first diameter around a forward pivot assembly by a plurality of respective forward pivot joints, the rear ends of the shell parts of the second series are each coupled by respective intermediate pivot joints to the front ends of the shell parts of the first series, and the rear ends of the shell parts of the first series to a base member on a second diameter which is larger than the first diameter. In this case internally mounted fluid drive means are preferably coupled to the shell parts in the region of the intermediate joints, having a generally cylindrical outer surface when in the contracted configuration, thereby defining the penetration diameter, and a forwardly tapering outer surface in a fully expanded configuration. This tapering outer surface advantageously corresponds substantially in shape to the forwardly tapering outer surface of the first series of shell parts when in their contracted configuration, such that the portion of the duct expanded by the nose portion is shaped to receive the whole length of the first series of shell parts, whilst a trailing part of the apparatus, which may or may not include the pipe lining behind it, simultaneously moves into a substantially cylindrical duct portion created by the expansion of the first series of shell parts.

According to a second aspect of the invention, there is provided apparatus for travelling through an underground duct and for enlarging or removing irregularities in the duct, wherein the apparatus comprises an expandable segmented shell including a plurality of shell parts arranged around a longitudinal axis of the apparatus and having respective outwardly facing surface portions for engaging the sides of the duct, and wherein the shell parts are drivable laterally with respect to the axis from a contracted configuration, in which at least a front end portion of the shell lies within a duct penetration diameter, to an expanded configuration in which the shell defines a forwardly tapered outer surface portion. Such tapering may be produced by a shell having two shell portions each having a respective series of transversely movable shell parts.

Method aspects of the invention include a method of removing irregularities in or enlarging an underground duct comprising the steps of:

(i) locating in the duct on expansion device including a leading expandable shell portion and a trailing expandable shell portion, which portions comprise respectively leading and trailing sets of shell parts which are movable laterally with respect to a longitudinal axis between a contracted configuration and an expanded configuration, the device being located in the duct with the shell parts in their contracted configuration and the leading shell portion in an unexpanded duct portion, (ii) driving the shell parts into their expanded configuration to force the sides of the duct away from the axis to create an enlarged duct portion having a front section which is forwardly tapering and a rear section having an overall diameter at least as large as the required diameter of the duct, (iii) causing the shell parts to return to their contracted configuration and the device to move forwardly by a distance such that leading shell portion enters a new unexpanded duct portion, and the trailing shell portion substantially occupies the said front section of the enlarged duct portion, and (iv) repeating steps (ii) and (ii) to traverse a required duct length.

In a preferred method, the apparatus or the expansion device are subjected to a continuous forwardly directed force and the shell parts are reciprocated back and forth in a regular manner. In this way, the apparatus or device moves forward automatically on each contraction stroke. Providing a nose portion corresponding, at least in the contracted configuration, substantially to the penetration diameter largely prevents the inward collapse of the sides of the duct prior to moving forward the apparatus or device.

The apparatus or device may be driven through the duct by repeatedly operating a hydraulic ram at an accessible location, the ram being alternately connected and disconnected during each operating stroke to a chain or wire connected to the device through the duct.

The invention will now be described by way of example with reference to the drawings in which:—

Figure 1 is a perspective view of an embodiment of the present invention showing a device having a segmented front section comprising two sets of shell parts;

Figure 2A is a cut away side view of the device of Figure 9 showing shell parts in a retracted configuration;

Figure 2B is a view similar to Figure 2A but showing shell parts in an expanded position;

Figure 3 shows an operative environment of the device shown in Figure 1—2 in an underground duct; and

Figure 4 shows an alternative expansion means for expanding the shell parts shown in Figures 1—3.

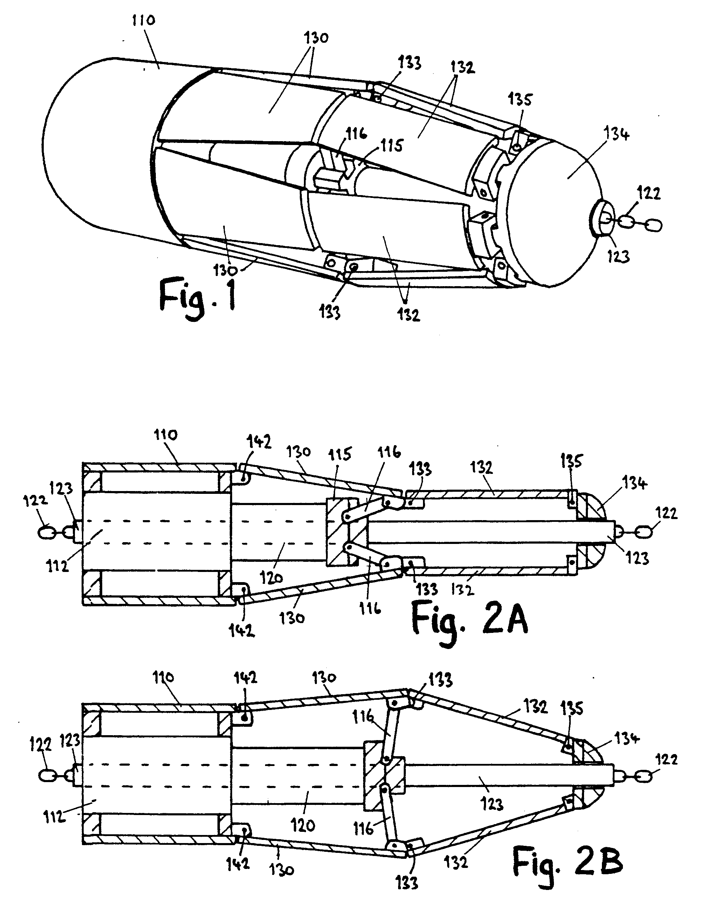

Referring to Figures 1, 2A and 2B, a sewer pipe expansion device in accordance with the invention has a front part which is an expandable shell having two sets of shell parts in the form of leaf members, these comprising (i) a first trailing set of leaf members 130 attached at their rear ends to a cylindrical rear body member 110 by a set of circumferential rear pivot joints 142, and (ii) a second, leading set of leaf members 132 each pivotally attached at their rear ends to the respective front ends of the trailing leaf members 130 by intermediate pivot joints 133, and at their front ends to a rounded front end pivot assembly 134 carrying a number of circumferential front pivot joints 135. Mounted in the body portion 110 is a longitudinal hydraulic ram 112 which in this example is annular, with an annular piston 120, providing a central longitudinal bore. This bore allows a central passage, defined by a tube 123, to be provided over the whole length of the device to receive a chain 122. The piston 120 carries a pivot block 115 which is, in turn, coupled by a plurality of radiating connecting links 116 to the intermediate pivot joints 133 for converting longitudinal motion of the piston 120 into lateral (with respect to the longitudinal axis of the device) motion of the front ends of the trailing leaf members 130 and the rear ends of the leading leaf members 132. The two sets of leaf members thus form an expandable shell having a leading portion constituting a nose portion for penetrating and expanding an unenlarged duct portion, and a trailing portion for subsequently further expanding that duct portion to an overall diameter such that the body portion can then move forwardly into the duct portion without further expansion of the duct sides.

In Figure 1, the device is shown in its expanded configuration with the trailing set of leaf members 130 forming an approximately cylindrical envelope having a diameter at least as large as the diameter of the body member 110. The leading set of leaf members 132 form a generally conical surface which tapers forwardly from a diameter at least as large as that of the body member 110 to a smaller penetration diameter at the extreme forward end of the device. In the contracted configuration, the trailing leaf members 130 form a similar forwardly tapering conical surface whilst the leading leaf members 132 form a cylinder of the smaller penetration diameter. The fully contracted and expanded configurations are shown more clearly in Figures 2A and 2B respectively, which are sectional views.

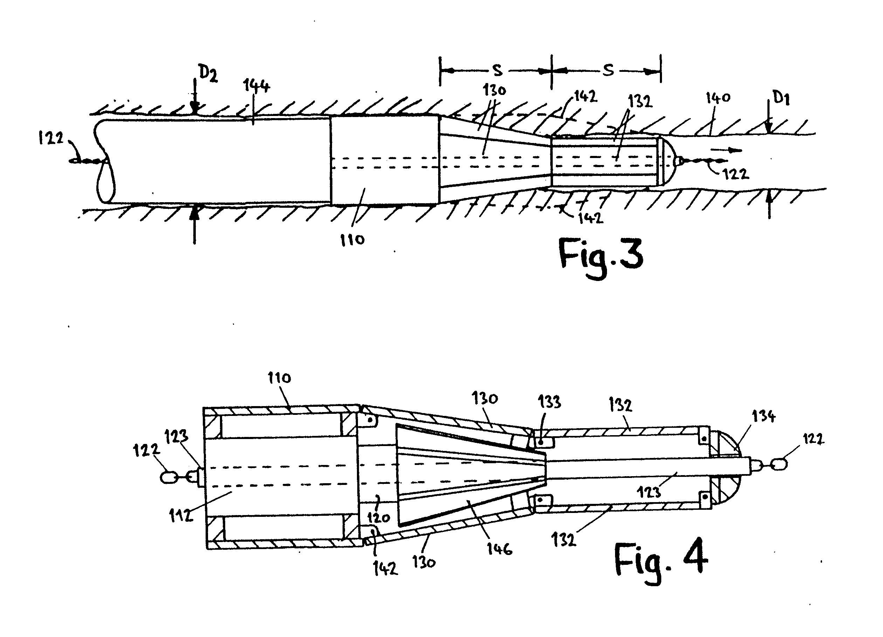

The split front part of the device shown in Figures 1—3 has particular advantage in the enlargement of a duct. As illustrated in Figure 3 where the device is shown in side elevation, the leading leaf members 132 in their contracted configuration are able to penetrate an original duct 140 of diameter $D_2$ which is larger than the penetration diameter referred to above but smaller than the diameter of the body member 110. The device is being used to enlarge the original duct 140 to a required diameter $D_2$ corresponding to the diameter of the body member 110, and at the same time, for drawing a pipe lining 144 of similar diameter through the duct behind it. With a continuous tension applied to the chain 122 (attached to the rear end of the lining 144 to place the joints between the sections of the lining under compression), the ram 112 (Figures 2A and 2B) is operated to expand the leaf members into the position shown by the dotted lines 142, forcing out the sides of the duct to the new diameter $D_2$. Since the leaf members are all of appoximately equal length the forwardly tapered profile of the expanded duct formed by the expansion of the leading leaf members 132 corresponds to the forwardly tapered surface formed by the trailing leaf members 130 in their contracted configuration. Thus, when the ram 112 is caused to retract, the whole device and the pipe lining 144 can move forward by a distance "S" which is the length of the leaf members. This means that in a duct enlarging operation a full length "S" of the duct can be enlarged with each cycle of the ram 112. The presence of the nose portion formed by the leading leaf members 132 reduces the possibility of the duct sides collapsing ahead of the device during the expansion operation, because the front ends of the leaf members 132 merely engage the duct sides to stabilise them without expanding them at that point.

Another embodiment of the invention is shown in section in Figure 4. In this embodiment a split expandable shell is employed as in Figures 1, 2A and 2B, but in this case a wedge expander 146 is coupled to the piston 120 instead of pivotable connecting links to expand the leaf members 130 and 132. This construction can be preferable when space is limited as in a device designed for relatively small ducts, typically 150 mm diameter or less.

**Claims**

1. Apparatus for travelling through an underground duct and for enlarging, or removing irregularities, in the duct, wherein the apparatus comprises an expandable segmented shell portion including a series of shell parts (130) arranged around a longitudinal axis of the apparatus and having respective outwardly facing surface portions for engaging the sides of the duct, wherein the shell parts (130) are movable laterally with respect to the axis from a concentrated configuration to an expanded configuration for forcing the sides of the duct away from the axis to enlarge a portion of the duct, and a nose portion (132) extending in a longitudinal direction forwardly of the segmented shell portion and having an outer surface for engaging the sides of the duct ahead of the said segmented shell portion.

2. Apparatus according to claim 1, wherein the nose portion comprises a second expandable and segmented shell including a second series of shell parts (132) arranged around a longitudinal axis and having respective second outwardly facing surface portions for engaging the sides of the duct, the shell parts (132) of the second series being movable transversely with respect the said axis between a contracted configuration and an expanded configuration.

3. Apparatus according to claim 2, wherein the shell parts (130, 132) of the first series and the second series each have a front end and a rear end, the front ends of the shell parts (132) of the second series are each coupled on a first diameter around a forward pivot assembly by a pluality of respective forward pivot joints (135), the rear ends of the shell parts (132) of the second series are each coupled by respective intermediate pivot joints (133) to the front ends of the shell parts (130) of the first series, and the rear ends of the shell parts (130) of the first series are each coupled to a base member (110) on a second diameter which is larger than the first diameter.

4. Apparatus according to claim 3, including internal fluid pressure drive means coupled to the shell parts (130, 132) in the region of the intermediate joints.

5. Apparatus according to claim 1, wherein the nose portion (132) defines a generally cylindrical outer surface defining a penetration diameter in at least one configuration of the shell parts.

6. Apparatus according to claim 2, wherein the shell parts (132) of the nose portion define a forwardly tapering outer surface in their fully expanded configuration.

7. Apparatus for travelling through an underground duct and for enlarging, or removing irregularities in the duct, wherein the apparatus comprises an expandable segmented shell including a plurality of shell parts (130, 132) arranged around a longitudinal axis of the apparatus and having respective outwardly facing surface portions for engaging the sides of the duct, and wherein the shell parts (130, 132) are drivable laterally with respect to the axis from a contracted configuration, in which at least a front end portion of the shell lies within a duct penetration diameter, to an expanded configuration in which the shell defines a forwardly tapered outer surface portion.

8. Apparatus according to claim 7, wherein the shell defines, in the expanded configuration, an outer surface having a forwardly tapered front surface portion and a cylindrical or rearwardly tapered rear surface portion.

9. Apparatus according to claim 8 having, in the contracted configuration of the shell parts, a forwardly tapered rear outer surface portion corresponding substantially in shape to the said forwardly tapered outer surface portion of the shell in the expanded configuration of the shell parts.

10. A method of removing irregularities in or enlarging an underground duct comprising:—

(i) locating in the duct an expansion device including a leading expandable shell portion and a trailing expandable shell portion, which portions comprise respectively leading and trailing sets of shell parts which are movable laterally with respect to a longitudinal axis between a contracted configuration and an expanded configuration, the device being located in the duct with the shell parts in their contracted configuration and the leading shell portion in an unexpanded duct portion;

(ii) driving the shell parts into their expanded configuration to force the sides of the duct away from the axis to create an enlarged duct portion having a front section which is forwardly tapering and a rear section having an overall diameter at least as large as the required diameter of the duct,

(iii) causing the shell parts to return to their contracted configuration and the device to move forwardly by a distance such that leading shell portion enters a new unexpanded duct portion, and the trailing shell portion substantially occupies the said front section of the enlarged duct portion, and

(iv) repeating steps (ii) and (ii) to traverse a required duct length.

11. A method according to claim 10, wherein a continuous forwardly directed force is appled to the device over a plurality of cycles of steps (ii) and (iii).

12. A method of lining an underground duct, including enlarging the duct as defined in claim 10, and simultaneously feeding a lining pipe into the duct.

13. A device for removing irregularities in or enlarging an underground duct comprising an expandable segmented shell having two sets of shell parts (130, 132) arranged around a longitudinal axis of the device, the two sets comprising a front set in which the shell (132) are each pivotally attached by front end portions thereof to a forward pivot assembly (135), and a rear set in which the shell parts (130) are each pivotally attached by front end portions thereof to rear end portions of respective shell parts of the front set, and by rear end portions thereof to a base member (110).

14. A method of removing irregularitites in or enlarging an underground duct including:

(i) locating in the duct apparatus according to any of claims 1 to 9 with the shell parts in their contracted configuration;

(ii) driving the shell parts in to their expanded configuration to create an expanded duct portion;

(iii) returning the shell parts to their contracted configuration and causing the apparatus to move forwardly into the expanded duct portion; and

(iv) repeating steps (ii) and (iii) to traverse a required length of the duct.

15. A method according to claim 14, wherein the expanded duct portion is forwardly tapered over at least a part of its length.

## Patentansprüche

1. Vorrichtung zum Durchfahren einer unterirdischen Rohrleitung und zum Aufweiten oder Entfernen von Unregelmäßigkeiten in der Rohrleitung, wobei die Vorrichtung einen aufweitbaren, geteilten Gehäuseabschnitt mit einer Reihe von Gehäuseteilen (130) aufweist, die um eine Längsachse der Vorrichtung herum angeordnet sind und jeweils nach außen weisende Oberflächenabschnitte zum Erfassen der Seiten der Rohrleitung aufweisen, wobei die Gehäuseteile (130) bezüglich der Achse lateral aus einer zusammengezogenen Stellung in eine ausgefahrene Stellung bewegbar sind, um die Seiten der Rohrleitung von der Achse weg zu zwingen und so einen Abschnitt der Rohrleitung aufzuweiten, wobei sich ferner ein Rumpfnasenabschnitt (132) in Längsrichtung nach vorne von dem geteilten Gehäuseabschnitt weg erstreckt, der eine äußere Oberfläche zum Erfassen der Seiten der Rohrleitung vor dem geteilten Gehäuseabschnitt aufweist.

2. Vorrichtung nach Anspruch 1, bei der der Rumpfnasenabschnitt ein zweites ausfahrbares und geteiltes Gehäuse mit einer zweiten Reihe von Gehäuseteilen (132) aufweist, die um eine Längsachse herum angeordnet sind und jeweils zweite, nach außen weisende Oberflächenabschnitte zum Ergreifen der Seiten der Rohrleitung aufweisen, wobei die Gehäuseteile (132) der zweiten Reihe bezüglich der Achse transversal zwischen einer zusammengezogenen Stellung und einer ausgefahrenen Stellung bewegbar sind.

3. Vorrichtung nach Anspruch 2, bei der Gehäuseteile (130, 132) der ersten Reihe und der zweiten Reihe jeweils ein vorderes und ein hinteres Ende aufweisen und die vorderen Enden der Gehäuseteile (132) der zweiten Serie jeweils auf einem ersten Durchmesser mittels einer Mehrzahl von jeweiligen Vorwärts-Schwenkverbindungen (135) um eine Vorwärts-Schwenkeinheit herum angeordnet sind und die rückwärtigen Enden der Gehäuseteile (132) der zweiten Serie jeweils mittels entsprechender Zwischenschwenkverbindungen (133) an die vorderen Enden der Gehäuseteile (130) der ersten Serie angeschlossen sind und daß die rückwärtigen Enden der Gehäuseteile (130) der ersten Serie jeweils an ein Grundglied (110) auf einem zweiten Durchmesser angeschlossen sind, der größer als der erste Durchmesser ist.

4. Vorrichtung nach Anspruch 3, die innere Fluiddruckantriebsmmittel aufweist, die an die Gehäuseteil (130, 132) im Bereich der Zwischenverbindungen angeschlossen sind.

5. Vorrichtung nach Anspruch 1, bei der der Rumpfnasenabschnitt (132) eine im wesentlichen zylindrische Außenoberfläche definiert, die ihrerseits einen Durchdringungsdurchmesser bei wenigstens einer Stellung der Gehäuseteile definiert.

6. Vorrichtung nach Anspruch 2, bei der dei Gehäuseteile (32) des Rumpfnasenabschnitts eine sich nach vorne verjüngende Außenoberflache in Ihrer von ausgefahrenen Stellung definiert.

7. Vorrichtung zum Durchfahren einer unterirdischen Rohrleitung und zum Aufweiten oder Entfernen von Unregelmäßigkeiten in der Rohrleitung, bei der die Vorrichtung ein aufweitbares, geteiltes Gehäuse mit einer Mehrzahl von Gehäusesteilen (130, 132) aufweist, die um eine Längsachse der Vorrichtung herum angeordnet sind und jeweils nach außen weisende Oberflächenabschnitte zum Ergreifen der Seiten der Rohrleitung aufweisen, und bei der die Gehäuseteile (130, 132) bezüglich der Achse aus einer zusammengezogenen Stellung, in der mindestens ein vorderer Endabschnitt des Gehäuses innerhalb eines Rohrleitungsdurchdringungsdurchmessers liegt, in einer ausgefahrene Stellung lateral antreibbar ist, in der das Gehäuse einen sich nach vorne verjüngenden äußeren Oberflächenabschnitt definiert.

8. Vorrichtung nach Anspruch 7, bei der das Gehäuse in einer ausgefahrenen Stellung eine Außenoberfläche definiert, die einen sich nach vorne verjüngenden vorderen Oberflächenabschnitt und einen zylindrischen oder sich nach hinten verjüngenden rückwärtigen Oberflächenabschnitt definiert.

9. Vorrichtung nach Anspruch 8, der in der zusammengezogenen Stellung der Gehäuseteile einen sich nach vorne verjüngenden rückwärtigen, äußeren Oberflächenabschnitt aufweist, der in seiner Gestalt im wesentlichen dem sich nach vorne verjüngenden äußeren Oberflächenabschnitt des Gehäuses in der ausgefahrenen Stellung der Gehäusesteile entspricht.

# 0 146 331

9      **0 146 331**      10

10. Verfahren zum Entfernen von Unregelmäßigkeiten in oder zum Aufweiten von einer unterirdischen Rohrleitung mit den Schritten:

(i) Anordnen eines Aufweitungsgerätes in der Rohrleitung mit einem vorderen ausfahrbaren Gehäuseabschnitt und mit einem hinteren aufweitbaren Gehäuseabschnitt, wobei diese Abschnitte jeweils vordere bzw. rückwärtige Sätze von Gehäuseteilen aufweisen, die bezüglich einer Längsachse zwischen einer zusammengezogenen Stellung und einer ausgefahrenen Stellung lateral bewegbar sind und das Gerät in der Rohrleitung mit den Gehäuseteilen in ihrer zusammengezogenen Stellung angeordnet ist, wobei sich der vordere Gehäuseabschnitt in einem ungeweiteten Rohrleitungsabschnitt befindet.

(ii) Verfahren der Gehäuseteile in ihre ausgefahrene Stellung, um die Seiten der Rohrleitung von der Achse weg zu zwingen und damit einen aufgeweiteten Rohrleitungsabschnitt zur erzeugen, der einen vorderen Abschnitt aufweist, der sich nach vorner verjünt sowie einen hinteren Abschnitt, der einen durchgehenden Durchmesser aufweist, der mindestens so groß ist, wie der vordere Durchmesser der Rohrleitung,

(iii) Verfahren der Gehäuseteile zurück in ihre zusammengezogene Stellung und Vorwärtsbewegen des Geräts um eine Wegstrecke derart, daß der vordere Gehäuseabschnitt in einen neuen, ungeweiteten Rohrleitungsabschnitt eintritt und der rückwärtige Gehäuseabschnitt im wesentlichen den vorderen Abschnitt des erweiterten Rohrleitungsabschnitts einnimmt, und

(iv) Wiederholen der Schritte (ii) und (iii) um eine gewünschte Länge der Rohrleitung zu durchmessen.

11. Verfahren nach Anspruch 10, bei dem eine ständige nach vorne gerichtete Kraft auf das Gerät während einer Mehrzahl von Zyklen von Schritten (ii) und (iii) ausgeübt wird.

12. Verfahren zum Auskleiden einer unterirdischen Rohrleitung einschließlich Aufweiten der Rohrleitung gemäß Anspruch 10 unter gleichzeitiger Einführung eines Auskleidungsrohrs in die Rohrleitung.

13. Gerät zum Entfernen von Unregelmäßigkeiten in oder zum Aufweiten von einer unterirdischen Rohrleitung mit einem ausfahrbaren, geteilten Gehäuse, das zwei Sätze von Gehäuseteilen (130, 132) aufweist, die um eine Längsachse des Gerätes herum angeordent sind, bei dem die beiden Sätze einen vorderen Satz umfassen, in dem die Gehäuseteile (132) jeweils schwenkbar mittels vorderen Endabschnitten an einer vorderen Schwenkeinheit (135) angeordent sind sowie einen rückwärtigen Satz umfassen, in dem die Gehäuseteile (130) jeweils schwenkbar mittels vorderer Endabschnitte an rückwärtige Endabschnitte entsprechender Gehäuseteile des vorderen Satzes angeschlossen sind und mittels rückwärtiger Endabschnitte an ein Grundglied (110).

14. Verfahren zum Entfernen von Unregelmäßigkeiten in oder zum Aufweiten von einer unterirdischen Rohrleitung mit:—

(i) Anordnen einer Vorrichtung nach einem der Ansprüche 1—9 in der Rohrleitung, mit den Gehäuseteilen in ihrer zusammengezogenen Stellung,

(ii) Verfahren der Gehäuseteile in ihre ausgefahrene Stelung um einen aufgeweiteten Rohrleitungsabschnitt zur erzeugen,

(iii) Zurückverbringen der Gehäuseteile in ihre zusammengezogene Stellung und Bewegen der Vorrichtung nach vorne in den aufgeweiteten Rohrleitungsabschnitt hinein, und

(iv) Wiederholen der Schritte (ii) und (iii) um eine gewünschte Länge der Rohrleitung zu durchmessen.

15. Verfahren nach Anspruch 14, bei dem der aufgeweitete Rohrleitungsabschnitt sich wenigstens über einen Teil seiner Länge nach vorne verjüngt.

**Revendications**

1. Appareil pour avancer dans un conduit souterrain et pour l'élargir ou enlever les irrégularités dans le conduit, cet appareil comprenant une partie en coquille segmentée expansible comportant une série de fragments de coquille (130) disposés autour d'un axe longitudinal de l'appareil et ayant respectivement des parties de surface faisant face vers l'extérieur pour agir sur les côtés du conduit, les fragments de coquille (130) étant mobiles latéralement par rapport à l'axe depuis une configuration contractée jusqu'à une configuration déployée pour repousser les côtés du conduit à l'écart de l'axe afin d'élargir une partie du conduit et une partie avant (132) s'étendant dans une direction longitudinale en avant de la partie en coquille segmentée et ayant une surface extérieure pour agir sur les côtés du conduit en avant de ladite partie en coquille segmentée.

2. Appareil selon la revendicatin 1, dans lequel la partie de l'extrémité avant comprend une seconde coquille expansible et segmentée comprenant une seconde série de parties de coquille (132 disposées autour d'un axe longitudinal et ayant des secondes parties respectives à surface vers l'extérieur pour agir sur les côtés du conduit, les parties de coquille (132) de la seconde série étant mobiles transversalement par rapport audit axe entre une configuration contractée et une configuration déployée.

3. Appareil selon la revendication 2, dans lequel les parties de coquille (130, 132) de la première série et de la seconde série ont chacune une extrémité avant et une extrémité arrière, les extrémités avant des parties de coquille (132) de la seconde série sont chacune accouplées sur un premier diamètre autour d'un ensemble d'articulations avant par une pluralité d'axes de pivotement avant respectifs (135), les extrémités arrière des parties de coquille (132) de la seconde série sont chacune accouplées par des axes de pivotement intermédiaires respectifs (133) aux extrémités avant des parties de coquille (130) de la première série et les extrémités arrière des parties de coquille de la première série sont accouplées chacune à un élément de base (110) sur un

6

second diamètre qui est plus grand que le premier diamètre.

4. Appareil selon la revendication 3, comprenant un moyen d'entraînement intérieur par pression de fluide accouplé aux parties de coquille (130, 132) dans la région des axes d'articulation intermédiaires.

5. Appareil selon la revendication 1, dans lequel la partie de tête (132) détermine une surface de forme générale cylindrique délimitant un diamètre de pénétration dans au moins une configuration des parties de coquille.

6. Appareil selon la revendication 2, dans lequel les parties de coquille (132) de la section de tête délimitent une surface extérieure rétrécie vers l'avant dans leur configuration pleinement déployée.

7. Appareil pour avancer à travers un conduit souterrain et pour l'élargir ou supprimer les irrégularités dans le conduit, cet appareil comprenant une coquille segmentée expansible comportant plusieurs parties de coquille (130, 132) disposées autour d'un axe longitudinal de l'appareil et ayant des parties respectives à surface faisant face à l'extérieur pour agir sur les côtés du conduit et les parties de coquille (130, 132) de l'appareil pouvant être entraînées latéralement par rapport à l'axe à partir d'une configuration contractée dans laquelle au moins une partie terminale avant de la coquille se trouve à l'intérieur d'un diamètre de pénétration du conduit jusqu'à une configuration déployée dans laquelle la coquille délimite une partie de surface extérieure rétrécie vers l'avant.

8. Appareil selon la revendication 7, dans lequel la coquille délimite, en configuration déployée, une surface extérieure ayant une partie de surface avant rétrécie vers l'avant et une partie de surface arrière cylindrique ou rétrécie vers l'arrière.

9. Appareil selon la revendication 8 ayant, dans la configuration contractée des parties de coquille, une partie de surface extérieure arrière rétrécie vers l'avant correspondant essentiellement par sa forme à la partie de surface extérieure rétrécie vers l'avant de la coquille dans la configuration déployée des parties de la coquille.

10. Procédé pour supprimer les irrégularités d'un conduit souterrain ou pour l'élargir comprenant:

(1°) le placement dans le conduit d'un dispositif expansible comprenant une partie avant de coquille expansible et une partie arrière de coquille expansible, ces parties comprenant respectivement des groupes avant et arrière de parties expansibles qui sont mobiles latéralement par rapport à un axe longitudinal entre une configuration contractée et une configuration déployée, le dispositif étant placé dans le conduit avec les parties de coquille dans leur configuration contractée et la partie de coquille avant dans une partie de conduit non élargie;

(2°) l'entraînement des parties de coquille dans leur configuration déployée pour écarter les côtés du conduit de l'axe afin de créer une partie de conduit élargie ayant une section avant qui est amincie vers l'avant et une section arrière ayant un diamètre total au moins aussi grand que le diamètre de conduit requis;

(3°) le retour des parties de coquille à leur configuration contractée et le déplacement du dispositif vers l'avant d'une distance telle que la partie de coquille avant pénètre dans une nouvelle partie de conduit non élargie et que la partie de coquille arrière occupe notablement ladit section avant de la partie de conduit élargie; et

(4°) la répétition des opérations (2°) et (3°) pour franchir une longueur de conduit requise.

11. Procédé selon la revendication 10, dans lequel une force dirigée vers l'avant est appliquée au dispositif sur une pluralité de cycles d'opérations (2°) et (3°).

12. Procédé de revêtement d'un conduit souterrain, comprenant l'élargissement du conduit comme le détermine la revendication 10 et l'amenée simultanée d'un tuyau de revêtement dans le conduit.

13. Dispositif pour supprimer les irrégularités d'un conduit souterrain ou pour l'élargir comprenant une coquille segmentée expansible ayant deux séries de parties de coquille (130, 132) autour d'un axe longitudinal du dispositif, les deux séries comprenant une série avant dans laquelle les parties de coquille (132) sont chacune articulées par des parties d'extrémités avant à un ensemble d'axes avant (135) et une série arrière dans laquelle les parties de coquille (130) sont chacune articulées par leurs parties extrêmes avant aux parties extrêmes arrière des parties de coquille respectives de la série avant et par des partie extrêmes arrière à un élément de base (110).

14. Procédé pour supprimer les irrégularités d'un conduit souterrain ou pour l'élargir comprenant:

(1°) le placement dans la conduit d'un appareil selon l'une quelconque des revendications 1 à 9 avec les parties de coquille dans leur configuration contractée;

(2°) l'entraînement des parties de coquille à leur configuration déployée pour créer une partie de conduit élargie;

(3°) le retour des parties de coquille à leur configuration contractée et l'avancement de l'appareil dans la partie de conduit élargie; et

(4°) la répétition des opérations (2°) et (3°) pour franchir une longueur requise du conduit.

15. Procédé selon la revendication 14, dans lequel la partie de conduit élargie se rétrécie vers l'avant sur au moins une partie de sa longueur.

Fig. 1

Fig. 2A

Fig. 2B

Fig.3

Fig. 4

0 146 331